Europäisches Patentamt

European Patent Office

Office européen des brevets

(11) Veröffentlichungsnummer: **0 464 490 A2**

## (12) EUROPÄISCHE PATENTANMELDUNG

(21) Anmeldenummer: **91110147.5**

(22) Anmeldetag: **20.06.91**

(51) Int. Cl.5: **B29C 67/20**, //B29K61:20

(30) Priorität: **29.06.90 DE 4020662**
**29.06.90 DE 4020663**

(43) Veröffentlichungstag der Anmeldung:
**08.01.92 Patentblatt 92/02**

(84) Benannte Vertragsstaaten:
**BE DE ES FR GB IT NL**

(71) Anmelder: **BASF Aktiengesellschaft**
**Carl-Bosch-Strasse 38**
**W-6700 Ludwigshafen(DE)**

(72) Erfinder: **Henze, Jürgen**
**L 13,6**
**W-6800 Mannheim 1(DE)**
Erfinder: **Krueckau, Fritz Ernst**
**Waldstrasse 23**
**W-6719 Battenberg(DE)**
Erfinder: **Schulze, Rolf**
**Neckarpromenade 20**
**W-6800 Mannheim 1(DE)**
Erfinder: **Stoehr, Dieter**
**Amselweg 15**
**W-6718 Gruenstadt(DE)**

(54) **Verfahren zur Herstellung von dreidimensionalen Formkörpern aus offenzelligen, elastischen, duroplastischen Schaumstoffen.**

(57) Verfahren zur Herstellung von dreidimensionalen Formkörpern aus offenzelligen, elastischen, duroplastischen Schaumstoffen, wobei man den Schaumstoff entweder a) für einen Zeitraum von 0,1 bis 120 min bei einer Temperatur von 100 bis 180 °C mit Wasserdampf beaufschlagt oder mit Wasser kocht und anschließend unter einem Druck von 0,1 bis 100 bar und bei einer Temperatur von 20 bis 280 °C verformt, oder b) bei einem Druck von 1,5 bis 15 bar verformt und anschließend im verformten Zustand für einen Zeitraum von 0,1 bis 60 min bei einer Temperatur von 100 bis 180 °C mit Wasserdampf beaufschlagt.

EP 0 464 490 A2

Die vorliegende Erfindung betrifft ein neues Verfahren zur Herstellung von dreidimensionalen Formkörpern aus offenzelligen, elastischen, duroplastischen Schaumstoffen.

Dreidimensionale Formkörper aus offenzelligen, elastischen, duroplastischen Schaumstoffen eignen sich aufgrund ihrer Stoffeigenschaften wie hohe Temperaturbeständigkeit, günstiges Brandverhalten und Beständigkeit gegen chemische Einflüsse besonders für den Wärme- und Schallschutz.

Bisher erfolgte die Formgebung einfacher Teile wie profilierter Deckensichtplatten durch Schneiden und Sägen. Für viele Anwendungsgebiete - speziell in der Kraftfahrzeugtechnik - wäre es vorteilhaft, wenn die Möglichkeit zur Herstellung komplizierterer Formteile gegeben wäre. Aus der EP-A 111 860 ist das Heißpressen von gegebenenfalls vorgeheizten elastischen Melaminharz-Schaumstoffen bekannt, wobei jedoch die Konturgenauigkeit des verformten Materials aufgrund der Nachstellkraft nicht in vollem Maße zufriedenstellend ist. Eine bleibende Verformung von Aminoplast-Schaumstoffen erhält man nach der FR-A 1 108 336 dadurch, daß man den im aushärtenden Zustand befindlichen, aber noch verformbaren Schaum verpreßt, und den so verdichteten Schaum anschließend aushärtet. Hierbei ist die Verarbeitung von feuchtem Material möglich, auch das Verpressen bei erhöhter Temperatur. Aus der US-A 3 504 064 ist bekannt, daß man Schaumstoffe auf Basis von Harnstoff-Formaldehyd-Kondensaten durch Verpressen in feuchtem Zustand bei erhöhter Temperatur und Trockenen unter Druck zu einem Schaumstoff komprimieren kann, der bei anschließender Behandlung mit Dampf wieder sein ursprüngliches Volumen einnimmt.

Der Erfindung lag daher die Aufgabe zugrunde, ein wirtschaftliches Verfahren zur konturgenauen Formgebung von dreidimensionalen Formkörpern aus offenzelligen, elastischen, duroplastischen Schaumstoffen zu entwickeln.

Diese Aufgabe wird erfindungsgemäß dadurch gelöst, daß man einen offenzelligen, elastischen, duroplastischen Schaumstoff entweder

a) für einen Zeitraum von 0,1 bis 120 min bei einer Temperatur von 100 bis 180°C mit Wasserdampf beaufschlagt oder mit Wasser kocht und anschließend unter einem Druck von 0,1 bis 100 bar und bei einer Temperatur von 20 bis 280°C verformt, oder

b) bei einem Druck von 1,5 bis 15 bar verformt und anschließend im verformten Zustand für einen Zeitraum von 0,1 bis 60 min bei einer Temperatur von 100 bis 180°C mit Wasserdampf beaufschlagt.

Verfahren zur Herstellung offenzelliger, elastischer, duroplastischer Schaumstoffe sind beispielsweise aus der EP-A 49 768 bekannt. Dort werden z.B. Schaumstoffe auf der Basis von Phenol- und substituierten Phenolharzen, Anilinharzen, Furanharzen, Ligninharzen, Epoxidharzen sowie hochvernetzten Polyurethanen und Polyisocyanaten beschrieben. Aus der DE-A 29 15 457 und der EP-A 31 513 sind offenzellige, elastische Aminoplast-Schaumstoffe und ihre Herstellung bekannt.

Offenzellige, elastische Melamin-Formaldehyd-Schaumstoffe, ihre Herstellung und ihre Eigenschaften sind beispielsweise in der DE-A 29 15 467 beschrieben. Sie enthalten mind. 50 Gew.-% Melamin- und Formaldehyd-Einheiten, sowie ggf. andere übliche Duroplastbildner und Aldehyde einkondensiert. Das Molverhältnis Duroplastbildner: Aldehyd kann in weiten Grenzen zwischen 1 : 1,5 und 1 : 4,5 schwanken; im Falle von Melamin-Formaldehyd-Kondensaten liegt es vorzugsweise zwischen 1 : 2,5 und 1 : 3,5. Sie werden hergestellt durch Verschäumen von wäßrigen Dispersionen, die das Aminoplast-Vorkondensat, einen Emulgator, ein flüchtiges Treibmittel, einen Härter, sowie zweckmäßigerweise ein Hydrophobierungs- und Stabilisierungsmittel enthalten, wobei vorzugsweise 65 bis 85 gew.-%ige Dispersionen eingesetzt werden und unter solchen Bedingungen verschäumt wird, daß zunächst nur ein geringer Viskositätsanstieg erfolgt und der Härtungsvorgang unter starker Viskositätserhöhung erst dann einsetzt, wenn der Schäumungsvorgang weitgehend beendet ist. Die dabei erhaltenen Schaumstoffe werden in bevorzugten Ausführungsformen anschließend einem Temper- und einem Walkprozeß unterworfen.

Bei dem erfindungsgemäßen Verfahren werden nun quader- oder würfelförmige offenzellige, elastische, duroplastische Schaumstoffe, bevorzugt Aminoplast-Schaumstoffe, insbesondere solche, auf Basis von Melamin-Formaldehyd-Harzen, in einer ersten Ausführungsform für einen Zeitraum von 0,1 bis 120 min, vorzugsweise 0,25 bis 60 min bei einer Temperatur von 100 bis 180°C, vorzugsweise 100 bis 160°C mit Wasserdampf beaufschlagt oder mit Wasser gekocht. Bei der Beaufschlagung mit Wasserdampf hat sich ein Zeitraum von 0,25 bis 5 min als besonders geeignet erwiesen, beim Kochen mit Wasser ein Zeitraum von 1 bis 60 min. Bei längerer Kochzeit hat sich die Verwendung von vollentsalztem Wasser als günstig erwiesen; darüber hinaus können auch weitere Lösungsmittel wie Alkanole mit 1 bis 8 C-Atomen oder Alkandiole mit 2 bis 8 C-Atomen eingesetzt werden. Weiterhin können dem Wasser Zusatzstoffe wie Hydrophobierungsmittel und Farbstoffe zugesetzt werden.

Bei einer zweiten Ausführungsform des erfindungsgemäßen Verfahrens werden quader- oder würfelförmige offenzellige, elastische, duroplastische Schaumstoffe, bevorzugt Aminoplast-Schaumstoffe, insbesondere solche, auf Basis von Melamin-Formaldehyd-Harzen, bei einem Druck von 1,5 bis 15 bar, bevorzugt 1,5 bis 7,5 bar verformt und anschließend im verformten Zustand für einen Zeitraum von 0,1 bis 60 min, vorzugsweise 0,25 bis 5 min bei einer Temperatur von 100 bis 180°C, vorzugsweise 100 bis 160°C mit Wasserdampf beaufschlagt.

Die Größe der quader- oder würfelförmigen Schaumstoffe kann in weiten Bereichen schwanken und ist an sich nicht kritisch, so daß sich hierzu nähere Angaben erübrigen.

Die Verformung des Schaumstoffes gemäß der ersten Ausführungsform erfolgt dadurch, daß dieser in einem ersten Verfahrensschritt mit Wasserdampf beaufschlagt oder in Wasser gekocht und in einem zweiten Verfahrensschritt verformt wird. Zwischen der Beaufschlagung des Schaumstoffes mit Wasserdampf oder dem Kochen in Wasser und dem Verformen kann eine Lagerzeit des vorbehandelten Schaumstoffes, vorzugsweise bei Raumtemperatur und Normaldruck von bis zu 3 Tagen liegen. Das Verformen erfolgt bevorzugt in einer Metallform mittels einer elektrisch beheizten und temperaturgeregelten hydraulischen Plattenpresse. Es wird bei einem Preßdruck von 0,1 bis 100 bar, vorzugsweise bei 0,5 bis 10 bar und bei einer Temperatur von 20 bis 280°C, bevorzugt bei 100 bis 160°C, verpreßt. Die Preßdauer beträgt 0,1 bis 60 min, bevorzugt 1 bis 5 min.

Die Verformung des Schaumstoffes gemäß der zweiten Ausführungsform erfolgt vorzugsweise unter Verwendung eines sogenannten Formteilautomaten. Hierbei wird der zu verformende Schaumstoff in Form eines Würfels oder Quaders, bevorzugt als Platte, in eine perforierte Metallform eingelegt und verformt. Anschließend wird der Schaumstoff im verformten Zustand unter den genannten Bedingungen mit Wasserdampf beaufschlagt.

Die nach dem erfindungsgemäßen Verfahren hergestellten dreidimensionalen Formkörper aus offenzelligen, elastischen, duroplastischen Schaumstoffen können kaschiert und laminiert werden; weiterhin können sie auch nachträglich mit Lösungen oder Dispersionen von Hydrophobierungsmitteln, von elastifizierenden Kunststoffen, von Tränkharzen, wie Phenolharze, oder von Farbstoffen getränkt oder gestrichen werden. Sie zeichnen sich durch hohe Konturgenauigkeit aus und eignen sich bevorzugt für vielfältige Anwendungen im Wärme- und Schallschutz sowie in der Automobiltechnik.

Beispiele

Nach der in der DE-A 29 15 467 Bsp. 7 beschriebenen Methode wurde ein offenzelliger, elastischer, duroplastischer Schaumstoff auf Basis Melamin-Formaldehyd-Harz hergestellt.

Beispiele 1 bis 6

Herstellung von dreidimensionalen Formkörpern durch Beaufschlagung mit Wasserdampf und anschließender Verformung.

Schaumstoffplatten der Größe 510 mm x 160 mm x 10 mm und einem Raumgewicht von 11,6 g/l (gemessen nach DIN 53 420) wurden mit Wasserdampf beaufschlagt. Nach einer Lagerzeit von 3 Tagen bei Raumtemperatur und Normaldruck wurden die vorbehandelten Platten in einer Plattenpresse auf eine Dicke von 3 mm komprimiert und bei einer Temperatur der Preßplatten von 200°C über einen Zeitraum von 2 min zusammengepreßt. Über die Enddicke nach 7 Tagen und das Raumgewicht (gemessen nach DIN 53 420) nach 7 Tagen in Abhängigkeit von der Dampfbeaufschlagungszeit und des Dampfdrucks gibt Tabelle 1 Aufschluß.

Vergleichsbeispiel V1

Es wurde wie in den Beispielen 1 bis 6 gearbeitet, jedoch ohne Dampfbeaufschlagung.

Beispiele 7 bis 13

Herstellung von dreidimensionalen Formkörpern durch Kochen in Wasser und anschließender Verformung

Schaumstoffplatten der Größe 130 mm x 40 mm x 30 mm und einem Raumgewicht von 10,9 g/l (gemessen nach DIN 53 420) wurden bei einer Temperatur von 117°C in einem Autoklaven mit Wasser gekocht und anschließend durch Abdrücken des Wassers in einem Rollenspalt auf einen Feuchtegehalt von 450 Gew.-% gebracht. Die so vorbehandelten Platten wurden in einer Plattenpresse bei einem Druck von 5 bar und einer Temperatur der Preßplatten von 300°C verpreßt. Die Ergebnisse der Enddicken nach 72 Stunden und der Raumgewichte (gemessen nach DIN 53 420) nach 72 Stunden in Abhängigkeit von der Koch- und Preßzeit sind in Tabelle 2 zusammengestellt.

Beispiele 14 bis 20

Herstellung von dreidimensionalen Formkörpern durch Kochen in vollentsalztem Wasser und anschließender Verformung

Es wurde wie in den Beispielen 7 bis 13 gearbeitet, jedoch statt in Wasser in vollentsalztem Wasser gekocht. Die Ergebnisse sind in Tabelle 3 zusammengestellt.

Vergleichsbeispiel V2

Es wurde wie in den Beispielen 7 bis 13 gearbeitet, jedoch ohne Kochen.

Beispiele 21 bis 26

Herstellung von dreidimensionalen Formkörpern durch Verformung und anschließender Beaufschlagung mit Wasserdampf.

Schaumstoffplatten der Größe 510 mm x 160 mm x 30 mm und einem Raumgewicht von 12,25 g/l (gemessen nach DIN 53 420) wurden in einem Formteilautomat auf eine Dicke von 10 mm komprimiert. Anschließend wurden die sich im verformten Zustand befindlichen Platten mit heißem Wasserdampf beaufschlagt. Über die Enddicke nach 7 Tagen und das Raumgewicht (gemessen nach DIN 53 420) nach 7 Tagen in Abhängigkeit von der Dampfbeaufschlagungszeit und der Dampftemperatur gibt Tabelle 4 Aufschluß.

Vergleichsbeispiel V3

Es wurde wie in den Beispielen 21 bis 26 gearbeitet, jedoch ohne Dampfbeaufschlagung.

Tabelle 1

| Beispiel | Dampfbeauf-schlagungszeit [sec] | Dampfdruck [bar] | Enddicke nach 7 Tagen [mm] | Raumgewicht nach 7 Tagen [g/l] |
|---|---|---|---|---|
| 1 | 15 | 2,0 | 8,4 | 13,49 |
| 2 | 30 | 2,0 | 8,3 | 13,71 |
| 3 | 60 | 2,0 | 8,1 | 13,90 |
| 4 | 15 | 3,5 | 7,9 | 14,45 |
| 5 | 30 | 3,5 | 7,8 | 15,00 |
| 6 | 60 | 3,5 | 7,5 | 15,20 |
| V1 | – | – | 8,6 | 12,61 |

Tabelle 2

| Beispiel | Kochzeit [min] | Preßzeit [min] | Enddicke nach 72 Stunden [mm] | Raumgewicht nach 72 Stunden [g/l] |
|---|---|---|---|---|
| 7 | 1 | 1 | 8,7 | 34 |
| 8 | 5 | 1 | 6,6 | 44 |
| 9 | 10 | 1 | 5,8 | 51 |
| 10 | 60 | 1 | 2,6 | 108 |
| 11 | 60 | 2 | 1,8 | 157 |
| 12 | 60 | 3 | 1,8 | 158 |
| 13 | 60 | 5 | 1,6 | 176 |
| V2 | – | 1 | 11,0 | 29 |

EP 0 464 490 A2

Tabelle 3

| Beispiel | Kochzeit [min] | Preßzeit [min] | Enddicke nach 72 Stunden [mm] | Raumgewicht nach 72 Stunden [g/l] |
|----------|------|------|------|------|
| 14 | 1 | 1 | 9,8 | 31 |
| 15 | 5 | 1 | 6,7 | 51 |
| 16 | 10 | 1 | 6,1 | 54 |
| 17 | 60 | 1 | 2,1 | 139 |
| 18 | 60 | 2 | 1,7 | 162 |
| 19 | 60 | 3 | 1,5 | 185 |
| 20 | 60 | 5 | 1,4 | 198 |
| V2 | – | 1 | 11,0 | 29 |

EP 0 464 490 A2

**Tabelle 4**

| Beispiel | Dampfbeauf-schlagungszeit [sec] | Dampftemperatur [°C] | Enddicke nach 7 Tagen [mm] | Raumgewicht nach 7 Tagen [g/l] |
|---|---|---|---|---|
| 21 | 15 | 120 | 24,7 | 12,8 |
| 22 | 30 | 120 | 23,6 | 13,0 |
| 23 | 60 | 120 | 20,5 | 15,3 |
| 24 | 15 | 140 | 23,5 | 13,0 |
| 25 | 30 | 140 | 21,4 | 15,6 |
| 26 | 60 | 140 | 18,9 | 17,1 |
| V3 | – | – | 29,2 | 12,5 |

## Patentansprüche

1. Verfahren zur Herstellung von dreidimensionalen Formkörpern aus offenzelligen, elastischen, duroplastischen Schaumstoffen, dadurch gekennzeichnet, daß man den Schaumstoff entweder

   a) für einen Zeitraum von 0,1 bis 120 min bei einer Temperatur von 100 bis 180 °C mit Wasserdampf beaufschlagt oder mit Wasser kocht und anschließend unter einem Druck von 0,1 bis 100 bar und bei einer Temperatur von 20 bis 280 °C verformt, oder

   b) bei einem Druck von 1,5 bis 15 bar verformt und anschließend im verformten Zustand für einen Zeitraum von 0,1 bis 60 min bei einer Temperatur von 100 bis 180 °C mit Wasserdampf beaufschlagt.

2.  Verfahren nach Anspruch 1, dadurch gekennzeichnet, daß der offenzellige, elastische, duroplastische Schaumstoff ein Aminoplast-Schaumstoff ist.

3.  Verfahren nach den Ansprüchen 1 bis 2, dadurch gekennzeichnet, daß der offenzellige, elastische, duroplastische Schaumstoff ein Schaumstoff auf der Basis von Melamin-Formaldehyd-Harz ist.